# EUROPEAN PATENT APPLICATION

(11) **EP 3 473 671 A1**
(43) Date of publication of application: **24.04.2019**
(21) Application number: 17813105.8
(22) Date of filing: 24.05.2017
(51) Int. Cl.: C08L 15/00, C08K 3/04, C08K 5/18

(54) **RUBBER COMPOSITION AND MOLDED ARTICLE**

(30) Priority: 15.06.2016 JP 2016119160
(71) Applicant: Zeon Corporation, Tokyo 100-8246 (JP)
(72) Inventor: KATADA Arinobu, Tokyo 100-8246 (JP)
(74) Representative: Maiwald Patent- und Rechtsanwaltsgesellschaft mbH
(86) International application number: PCT/JP2017/019422
(87) International publication number: WO 2017/217203

(57) **Abstract**

Provided are a shaped product having excellent heat resistance and a rubber composition with which the shaped product can be formed. The rubber composition contains a rubber including an ethylenically unsaturated monomer unit having at least one carboxyl group, a compound having at least one amino group and an aromatic condensed ring structure including at least three rings, and one or more carbon nanotubes. The shaped product is obtained through shaping of the rubber composition.

## Description

### TECHNICAL FIELD

The present disclosure relates to a rubber composition and a shaped product, and, in particular, relates to a carbon nanotube-containing rubber composition and a shaped product obtained through shaping of the rubber composition.

### BACKGROUND

In recent years, composite materials in which carbon nanotubes (hereinafter, also referred to as "CNTs") are compounded with an elastomer, such as a rubber, have been attracting interest as materials that have excellent heat resistance and mechanical properties.

In one example, PTL 1 discloses a composite material having excellent processability and heat resistance that is a crosslinked rubber obtained through crosslinking of a crosslinkable rubber composition containing a rubber including a carboxyl group-containing ethylenically unsaturated monomer unit, an amine crosslinking agent having a melting point of at least 50°C and not higher than 180°C, and CNTs.

### CITATION LIST

### Patent Literature

PTL 1: WO 2016/013218 A1

### SUMMARY

### (Technical Problem)

However, there has been demand for further improvement of heat resistance of shaped products formed from composite materials in recent years. Therefore, there is room for improvement over a shaped product formed from the conventional crosslinked rubber described above in terms of further improving heat resistance.

Accordingly, an objective of the present disclosure is to provide a shaped product having excellent heat resistance and a rubber composition with which the shaped product can be formed.

### (Solution to Problem)

The inventor conducted diligent investigation in order to achieve the objective described above. Through this investigation, the inventor discovered that a shaped product obtained using a rubber composition that contains a rubber including a specific monomer unit, a compound having a specific structure, and one or more carbon nanotubes has excellent heat resistance. This discovery led to the present disclosure.

Specifically, the present disclosure aims to advantageously solve the problems set forth above by disclosing a rubber composition comprising: a rubber including an ethylenically unsaturated monomer unit having at least one carboxyl group; a compound having at least one amino group and an aromatic condensed ring structure including at least three rings; and one or more carbon nanotubes. Through use of a rubber composition containing a rubber including an ethylenically unsaturated monomer unit having at least one carboxyl group, a compound having at least one amino group and an aromatic condensed ring structure including at least three rings, and one or more carbon nanotubes as set forth above, a shaped product having excellent heat resistance can be obtained.

The phrase "including a monomer unit" as used in the present disclosure means that "a polymer (rubber) obtained with the monomer includes a structural unit derived from the monomer". Moreover, the phrase "an aromatic condensed ring structure including at least three rings" as used in the present disclosure refers to a structure formed through condensation of at least three monocyclic rings that are of at least one type selected from the group consisting of an aromatic hydrocarbon ring and an aromatic heteroring.

In the presently disclosed rubber composition, the compound is preferably contained in a proportion of at least 0.5 parts by mass and not more than 5 parts by mass per 100 parts by mass of the rubber. When the content of the compound is within the range set forth above, heat resistance of a shaped product can be further improved.

Moreover, in the presently disclosed rubber composition, the compound is preferably at least one selected from the group consisting of 2-aminoanthracene, 1-aminopyrene, 1,6-diaminopyrene, and 3-amino-9-ethylcarbazole. When any of these compounds is used, heat resistance of a shaped product can be further improved.

Furthermore, the present disclosure aims to advantageously solve the problems set forth above by disclosing a shaped product obtained through shaping of any one of the rubber compositions set forth above. A shaped product obtained through shaping of any one of the rubber compositions set forth above has excellent heat resistance.

### (Advantageous Effect)

According to the present disclosure, it is possible to provide a shaped product having excellent heat resistance and a rubber composition with which the shaped product can be formed.

### DETAILED DESCRIPTION

The following provides a detailed description of an embodiment of the present disclosure.

A presently disclosed rubber composition can be used in production of a presently disclosed shaped product. Moreover, the presently disclosed shaped product is obtained through shaping of the presently disclosed rubber composition and has excellent heat resistance. The presently disclosed shaped product can be used for various applications such as belts, hoses, gaskets, packing, oil seals, and so forth, without any specific limitations.

### (Rubber composition)

The presently disclosed rubber composition contains a rubber including an ethylenically unsaturated monomer unit having at least one carboxyl group, a compound having at least one amino group and an aromatic condensed ring structure including at least three rings, and one or more carbon nanotubes. As a result of the presently disclosed rubber composition containing a rubber including a specific monomer unit, a compound having a specific structure, and one or more carbon nanotubes, a shaped product obtained using the rubber composition has excellent heat resistance. The presently disclosed rubber composition may further contain, besides the components described above, compounding agents that are normally used in the field of rubber processing.

Although it is not clear why a shaped product having excellent heat resistance is obtained using the rubber composition set forth above, the reason is presumed to be that in a shaped product formed using the rubber composition set forth above, an amino group of the compound and a carboxyl group of the rubber undergo a reaction to form an amide bond, and also π-π interactions act between the carbon nanotubes and the aromatic condensed ring structure including at least three rings that is included in the compound bonded to the rubber.

### <Rubber>

The rubber composition is required to contain at least the rubber including the ethylenically unsaturated monomer unit having at least one carboxyl group (hereinafter, also referred to simply as a "carboxyl group-containing ethylenically unsaturated monomer unit") as a rubber component.

However, note that besides the rubber including the carboxyl group-containing ethylenically unsaturated monomer unit, the rubber composition may further contain a rubber that does not include a carboxyl group-containing ethylenically unsaturated monomer unit.

### [Rubber including carboxyl group-containing ethylenically unsaturated monomer unit]

Herein, the rubber including the carboxyl group-containing ethylenically unsaturated monomer unit may be any synthetic rubber that includes, in the rubber, a structural unit derived from a carboxyl group-containing ethylenically unsaturated monomer.

No specific limitations are placed on carboxyl group-containing ethylenically unsaturated monomers that can be used to prepare the rubber including the carboxyl group-containing ethylenically unsaturated monomer unit and ethylenically unsaturated monomers having at least one carboxyl group may be used. Specific examples of carboxyl group-containing ethylenically unsaturated monomers that can be used include carboxylic acid monomers such as acrylic acid, methacrylic acid, ethacrylic acid (2-ethylacrylic acid), itaconic acid, maleic acid, fumaric acid, and citraconic acid; and butenedioic acid monoalkyl ester monomers such as monomethyl maleate, monoethyl maleate, mono-n-butyl maleate, monomethyl fumarate, monoethyl fumarate, and mono-n-butyl fumarate. Note that the carboxyl group may be a carboxylic anhydride group. Specific examples of carboxylic anhydride monomers that are carboxylic anhydride group-containing ethylenically unsaturated monomers include maleic anhydride and citraconic anhydride. Among the examples given above, the carboxyl group-containing ethylenically unsaturated monomer is preferably a butenedioic acid monoalkyl ester monomer and, in particular, is more preferably a butenedioic acid monoalkyl ester including an alkyl group having a carbon number of 1 to 4 such as monoethyl maleate, mono-n-butyl maleate, monomethyl fumarate, monoethyl fumarate, or mono-n-butyl fumarate.

Any one of such carboxyl group-containing ethylenically unsaturated monomers may be used individually, or any two or more of such carboxyl group-containing ethylenically unsaturated monomers may be used in combination.

From a viewpoint of heat resistance of the shaped product obtained using the rubber composition, it is preferable that the rubber including the carboxyl group-containing ethylenically unsaturated monomer unit is a nitrile rubber synthesized using the carboxyl group-containing ethylenically unsaturated monomer described above (i.e., a carboxylated nitrile rubber), a hydrogenated nitrile rubber synthesized using the carboxyl group-containing ethylenically unsaturated monomer described above (i.e., a hydrogenated carboxylated nitrile rubber), or an acrylic rubber synthesized using the carboxyl group-containing ethylenically unsaturated monomer described above (i.e., a carboxylated acrylic rubber). Among these rubbers, the rubber including the carboxyl group-containing ethylenically unsaturated monomer unit is more preferably a hydrogenated carboxylated nitrile rubber or a carboxylated acrylic rubber, and is even more preferably a hydrogenated carboxylated nitrile rubber from a viewpoint of further improving heat resistance of the shaped product.

Any one of such rubbers may be used individually, or any two or more of such rubbers may be used in combination.

### [[Carboxylated nitrile rubber]]

The carboxylated nitrile rubber that may be compounded into the rubber composition is, for example, a nitrile rubber that includes an α,β-ethylenically unsaturated nitrile monomer unit, a diene monomer unit, and a carboxyl group-containing ethylenically unsaturated monomer unit, and that optionally further includes other monomer units that are copolymerizable with monomers used to form the preceding monomer units.

Examples of α,β-ethylenically unsaturated nitrile monomers that can be used to form the α,β-ethylenically unsaturated nitrile monomer unit include, but are not specifically limited to, α,β-ethylenically unsaturated nitrile compounds having a nitrile group such as acrylonitrile; α-halogenoacrylonitriles, examples of which include α-chloroacrylonitrile and α-bromoacrylonitrile; and α-alkylacrylonitriles, examples of which include methacrylonitrile. Among these monomers, acrylonitrile and methacrylonitrile are preferable.

Any one of such α,β-ethylenically unsaturated nitrile monomers may be used individually, or any two or more of such α,β-ethylenically unsaturated nitrile monomers may be used in combination.

The content of the α,β-ethylenically unsaturated nitrile monomer unit in the carboxylated nitrile rubber is preferably 5 mass% or more, more preferably 8 mass% or more, and even more preferably 10 mass% or more, and is preferably 60 mass% or less, more preferably 40 mass% or less, and even more preferably 35 mass% or less. As a result of the content of the α,β-ethylenically unsaturated nitrile monomer unit being within any of the ranges set forth above, the shaped product can be provided with excellent physical properties (for example, oil resistance and cold resistance).

Examples of diene monomers that can be used to form the diene monomer unit include conjugated diene monomers having a carbon number of 4 or more such as 1,3-butadiene, isoprene, 2,3-dimethyl-1,3-butadiene, and 1,3-pentadiene; and non-conjugated diene monomers having a carbon number of preferably 5 to 12 such as 1,4-pentadiene and 1,4-hexadiene. Among such diene monomers, conjugated diene monomers are preferable, and 1,3-butadiene is more preferable.

The content of the diene monomer unit in the carboxylated nitrile rubber is preferably 20 mass% or more, more preferably 25 mass% or more, even more preferably 30 mass% or more, and particularly preferably 35 mass% or more, and is preferably 89.5 mass% or less, more preferably 81 mass% or less, even more preferably 74.5 mass% or less, and particularly preferably 69.5 mass% or less. As a result of the content of the diene monomer unit being within any of the ranges set forth above, the shaped product can be provided with excellent physical properties (for example, rubber elasticity, heat resistance, oil resistance, and chemical stability).

Examples of carboxyl group-containing ethylenically unsaturated monomers that can be used to form the carboxyl group-containing ethylenically unsaturated monomer unit include, but are not specifically limited to, the same carboxyl group-containing ethylenically unsaturated monomers as previously described. Among such monomers, the carboxyl group-containing ethylenically unsaturated monomer used to form the carboxyl group-containing ethylenically unsaturated monomer unit in the carboxylated nitrile rubber is preferably monomethyl maleate, monoethyl maleate, or mono-n-butyl maleate, and is more preferably mono-n-butyl maleate from a viewpoint of dispersibility of the CNTs described further below.

The content of the carboxyl group-containing ethylenically unsaturated monomer unit in the carboxylated nitrile rubber is preferably 0.1 mass% or more, more preferably 0.5 mass% or more, and even more preferably 1 mass% or more, and is preferably 20 mass% or less, more preferably 10 mass% or less, and even more preferably 8 mass% or less. As a result of the content of the carboxyl group-containing ethylenically unsaturated monomer unit being within any of the ranges set forth above, heat resistance of the shaped product can be sufficiently improved.

Examples of other monomers that can be used to form other monomer units include known monomers that are copolymerizable with the α,β-ethylenically unsaturated nitrile monomer unit, the diene monomer unit, and the carboxyl group-containing ethylenically unsaturated monomer unit. Specific examples of other monomers that can be used include esters of monovalent alcohols and monovalent (meth)acrylic acids (alkyl (meth)acrylates) such as methyl (meth)acrylate, ethyl (meth)acrylate, n-propyl (meth)acrylate, n-butyl (meth)acrylate, isopropyl (meth)acrylate, isobutyl (meth)acrylate, n-hexyl (meth)acrylate, 2-ethylhexyl (meth)acrylate, and cyclohexyl (meth)acrylate; aromatic vinyl monomers such as styrene, α-methylstyrene, and vinylpyridine; fluorine-containing vinyl monomers such as fluoroethyl vinyl ether, fluoropropyl vinyl ether, o-trifluoromethylstyrene, vinyl pentafluorobenzoate, difluoroethylene, and tetrafluoroethylene; and copolymerizable anti-aging agents such as N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, and N-phenyl-4-(4-vinylbenzyloxy)aniline.

In the present specification, "(meth)acryl" is used to indicate "acryl" and/or "methacryl".

The content of these other monomer units in the carboxylated nitrile rubber is an amount that does not substantially impair the effects disclosed herein and is normally less than 50 mass%, preferably 0 mass% to 10 mass%, and more preferably 0 mass% to 5 mass%.

The polymer Mooney viscosity (ML₁₊₄, 100°C) of the carboxylated nitrile rubber is preferably at least 15 and not more than 200, more preferably at least 15 and not more than 150, and even more preferably at least 15 and not more than 100. An excessively small Mooney viscosity may result in the shaped product having poor mechanical strength. Conversely, an excessively large Mooney viscosity may result in the shaped product having poor processability.

The carboxylated nitrile rubber can be obtained through polymerization of a monomer mixture that contains the monomers described above. The mode of polymerization reaction may, for example, be any of emulsion polymerization, suspension polymerization, bulk polymerization, and solution polymerization. However, emulsion polymerization at normal pressure is preferable, for example, in terms of ease of controlling the polymerization reaction. The emulsion polymerization may be carried out by a batch process, a semibatch process, or a continuous process.

### [[Hydrogenated carboxylated nitrile rubber]]

The hydrogenated carboxylated nitrile rubber that may be compounded into the rubber composition is, for example, a hydrogenated rubber obtained through hydrogenation of the diene monomer unit in the carboxylated nitrile rubber described above by a known method. In the hydrogenated carboxylated nitrile rubber obtained through hydrogenation of the above-described carboxylated nitrile rubber by a known method, a portion of or all diene monomer units in the carboxylated nitrile rubber are hydrogenated to form an alkylene structural unit. In other words, the hydrogenated carboxylated nitrile rubber that may be compounded into the rubber composition includes an α,β-ethylenically unsaturated nitrile monomer unit, a diene monomer unit and/or an alkylene structural unit, and a carboxyl group-containing ethylenically unsaturated monomer unit, and may optionally further include other monomer units that are copolymerizable with monomers used to form the preceding monomer units.

Selective hydrogenation of the diene monomer unit in the above-described carboxylated nitrile rubber can, for example, be carried out by a commonly known method such as an oil-layer hydrogenation method or a water-layer hydrogenation method.

The iodine value of the hydrogenated carboxylated nitrile rubber is preferably 120 or less, more preferably 80 or less, even more preferably 25 or less, and particularly preferably 15 or less. An excessively large iodine value for the hydrogenated carboxylated nitrile rubber may lead to reduction of physical properties of the shaped product (for example, heat stability and ozone resistance).

The polymer Mooney viscosity (ML₁₊₄, 100°C) of the hydrogenated carboxylated nitrile rubber is preferably at least 15 and not more than 200, more preferably at least 15 and not more than 150, and even more preferably at least 15 and not more than 100. An excessively small Mooney viscosity may result in the shaped product having poor mechanical strength. Conversely, an excessively large Mooney viscosity may result in the shaped product having poor processability.

### [[Carboxylated acrylic rubber]]

The carboxylated acrylic rubber that may be compounded into the rubber composition is, for example, an acrylic rubber that includes a (meth)acrylic acid ester monomer unit and a carboxyl group-containing ethylenically unsaturated monomer unit, and that optionally further includes other monomer units that are copolymerizable with monomers used to form the preceding monomer units.

Examples of (meth)acrylic acid ester monomers that can be used to form the (meth)acrylic acid ester monomer unit, which is a main component of the carboxylated acrylic rubber, include, but are not specifically limited to, alkyl(meth)acrylate monomers and alkoxyalkyl(meth)acrylate monomers.

Although no specific limitations are placed on alkyl(meth)acrylate monomers that can be used, an ester of an alkanol having a carbon number of 1 to 8 and (meth)acrylic acid is preferable. Specific examples of alkyl (meth)acrylate monomers that can be used include methyl(meth)acrylate, ethyl(meth)acrylate, n-propyl(meth)acrylate, n-butyl(meth)acrylate, isopropyl(meth)acrylate, isobutyl(meth)acrylate, n-hexyl(meth)acrylate, 2-ethylhexyl(meth)acrylate, and cyclohexyl(meth)acrylate. Among these alkyl(meth)acrylate monomers, ethyl(meth)acrylate and n-butyl (meth)acrylate are preferable, and ethyl acrylate and n-butyl acrylate are particularly preferable. One of such alkyl(meth)acrylate monomers may be used individually, or two or more of such alkyl(meth)acrylate monomers may be used in combination.

Although no specific limitations are placed on alkoxyalkyl (meth)acrylate monomers that can be used, an ester of an alkoxyalkyl alcohol having a carbon number of 2 to 8 and (meth)acrylic acid is preferable. Specific examples include methoxymethyl(meth)acrylate, ethoxymethyl (meth)acrylate, 2-methoxyethyl(meth)acrylate, 2-ethoxyethyl(meth)acrylate, 2-propoxyethyl(meth)acrylate, 2-butoxyethyl(meth)acrylate, 3-methoxypropyl(meth)acrylate, and 4-methoxybutyl(meth)acrylate. Among these alkoxyalkyl(meth)acrylate monomers, 2-ethoxyethyl(meth)acrylate and 2-methoxyethyl(meth)acrylate are preferable, and 2-ethoxyethyl acrylate and 2-methoxyethyl acrylate are particularly preferable. One of such alkoxyalkyl (meth)acrylate monomers may be used individually, or two or more of such alkoxyalkyl (meth)acrylate monomers may be used in combination.

The content of the (meth)acrylic acid ester monomer unit in the carboxylated acrylic rubber is normally 50 mass% or more, preferably 80 mass% or more, more preferably 90 mass% or more, and even more preferably 92 mass% or more, and is preferably 99.9 mass% or less, more preferably 99.5 mass% or less, and even more preferably 99 mass% or less. If the content of the (meth)acrylic acid ester monomer unit is too small, heat resistance and the like of the shaped product may be reduced.

Furthermore, the percentage of alkyl(meth)acrylate monomer units in the (meth)acrylic acid ester monomer units is preferably 30 mass% to 100 mass%.

Examples of carboxyl group-containing ethylenically unsaturated monomers that can be used to form the carboxyl group-containing ethylenically unsaturated monomer unit include, but are not specifically limited to, the same carboxyl group-containing ethylenically unsaturated monomers as previously described. Among such monomers, the carboxyl group-containing ethylenically unsaturated monomer used to form the carboxyl group-containing ethylenically unsaturated monomer unit in the carboxylated acrylic rubber is preferably monomethyl fumarate, monoethyl fumarate, or mono-n-butyl fumarate, and is more preferably monomethyl fumarate from a viewpoint of dispersibility of the CNTs described further below.

The content of the carboxyl group-containing ethylenically unsaturated monomer unit in the carboxylated acrylic rubber is preferably 0.1 mass% or more, more preferably 0.5 mass% or more, and even more preferably 1 mass% or more, and is preferably 20 mass% or less, more preferably 10 mass% or less, and even more preferably 8 mass% or less. As a result of the content of the carboxyl group-containing ethylenically unsaturated monomer unit being within any of the ranges set forth above, heat resistance of the shaped product can be sufficiently improved.

Examples of other monomers that can be used to form other monomer units include known monomers that are copolymerizable with the (meth)acrylic acid ester monomer and the carboxyl group-containing ethylenically unsaturated monomer. Specific examples of other monomers that can be used include acrylonitrile, methacrylonitrile, ethylene, propylene, vinyl chloride, vinylidene chloride, vinyl acetate, ethyl vinyl ether, butyl vinyl ether, styrene, α-methylstyrene, isoprene, butadiene, chloroprene, piperylene, dicyclopentadiene, norbornene, ethylidene norbornene, hexadiene, norbornadiene, divinyl benzene, ethylene glycol diacrylate, propylene glycol diacrylate, ethylene glycol dimethacrylate, and propylene glycol dimethacrylate.

It should be noted that polyfunctional(meth)acrylates such as ethylene glycol diacrylate, propylene glycol diacrylate, ethylene glycol dimethacrylate, and propylene glycol dimethacrylate are not considered to be included among the (meth)acrylic acid ester monomers described above.

The content of these other monomer units in the carboxylated acrylic rubber is an amount that does not substantially impair the effects disclosed herein and is normally less than 50 mass%, preferably 0 mass% to 10 mass%, and more preferably 0 mass% to 5 mass%.

The polymer Mooney viscosity (ML₁₊₄, 100°C) of the carboxylated acrylic rubber is preferably at least 10 and not more than 80, and more preferably at least 20 and not more than 70. An excessively small Mooney viscosity may result in the shaped product having poor mechanical strength. Conversely, an excessively large Mooney viscosity may result in the shaped product having poor processability.

The carboxylated acrylic rubber can be obtained through polymerization of a monomer mixture that contains the monomers described above. The mode of polymerization reaction may, for example, be any of emulsion polymerization, suspension polymerization, bulk polymerization, and solution polymerization. However, emulsion polymerization at normal pressure is preferable, for example, in terms of ease of controlling the polymerization reaction. The emulsion polymerization may be carried out by a batch process, a semibatch process, or a continuous process.

### <Compound having at least one amino group and aromatic condensed ring structure including at least three rings>

The compound having at least one amino group and an aromatic condensed ring structure including at least three rings is a compound that can form an amide bond through reaction of an amino group (-NH₂) thereof with a carboxyl group in the above-described rubber as previously explained.

### [Amino group]

Although no specific limitations are placed on the number of amino groups in a single molecule of the compound so long as it is at least 1, the number of amino groups is preferably 5 or less, and more preferably 2 or less. In a situation in which the number of amino groups is too high, processability of the shaped product may decrease due to formation of a crosslinked structure through the compound, and it may become harder for π-π interactions to arise between the aromatic condensed ring structure including at least three rings and carbon nanotubes in the shaped product.

An amino group may be bonded directly to the aromatic condensed ring structure including at least three rings or may be bonded indirectly to the aromatic condensed ring structure including at least three rings.

### [Aromatic condensed ring structure including at least three rings]

No specific limitations are placed on the aromatic condensed ring structure including at least three rings in the compound so long as it is a structure formed through condensation of at least three monocyclic rings that are of at least one type selected from the group consisting of monocyclic aromatic hydrocarbon rings such as a benzene ring and monocyclic aromatic heterorings such as a pyrrole ring, a furan ring, a pyridine ring, an imidazole ring, a pyrazole ring, an oxazole ring, a thiazole ring, and a pyrazine ring.

Note that if a compound having only a monocyclic aromatic ring structure and/or a bicyclic aromatic condensed ring structure is used, sufficient π-π interactions with carbon nanotubes cannot be obtained, and heat resistance of the shaped product cannot be sufficiently improved.

In particular, the aromatic condensed ring structure is preferably an aromatic condensed ring structure including at least four rings and not more than eight rings. This is because good π-π interactions with carbon nanotubes can be obtained, and consequently heat resistance of the shaped product can be further improved when the compound has an aromatic condensed ring structure formed through condensation of four or more monocyclic rings such as described above. Moreover, reactivity with the rubber may decrease due to steric hinderance or the like if the compound has an aromatic condensed ring structure formed through condensation of nine or more monocyclic rings such as described above.

Examples of the aromatic condensed ring structure including at least three rings include, but are not specifically limited to, an anthracene ring structure, a pyrene ring structure, a carbazole ring structure, and an N-alkylcarbazole ring structure.

Moreover, specific examples of the compound having at least one amino group and an aromatic condensed ring structure including at least three rings include, but are not specifically limited to, aminoanthracenes such as 1-aminoanthracene and 2-aminoanthracene, mono and diaminopyrenes such as 1-aminopyrene, 1,3-diaminopyrene, 1,6-diaminopyrene, and 1,8-diaminopyrene, and amino-N-alkylcarbazoles such as 3-amino-9-ethylcarbazole. Of these compounds, 2-aminoanthracene, 1-aminopyrene, 1,6-diaminopyrene, and 3-amino-9-ethylcarbazole are preferable, and 1-aminopyrene and 1,6-diaminopyrene are more preferable from a viewpoint of ease of acquisition and favorable improvement of heat resistance of the shaped product.

Any one of such compounds may be used individually, or any two or more of such compounds may be used in combination.

### [Compounded amount]

The amount of the compound having at least one amino group and an aromatic condensed ring structure including at least three rings that is compound per 100 parts by mass of the rubber is preferably 0.5 parts by mass or more, and more preferably 0.8 parts by mass or more, and is preferably 5 parts by mass or less, more preferably 3 parts by mass or less, and even more preferably 1.5 parts by mass or less. As a result of the amount of the compound having at least one amino group and an aromatic condensed ring structure including at least three rings being within any of the ranges set forth above, sufficient π-π interactions can be caused while inhibiting reduction of heat resistance of the shaped product caused by an excessive amount of the compound. Consequently, heat resistance of the shaped product can be sufficiently increased.

### <Carbon nanotubes (CNTs)>

Single-walled carbon nanotubes and/or multi-walled carbon nanotubes can be used as the CNTs without any specific limitations. However, the CNTs are preferably carbon nanotubes having 1 to 5 walls, and are more preferably single-walled carbon nanotubes. When single-walled carbon nanotubes are used, heat resistance of the shaped product can be further improved compared to a situation in which multi-walled carbon nanotubes are used.

The average diameter (Av) of the CNTs is preferably 0.5 nm or more, and more preferably 1 nm or more, and is preferably 15 nm or less, and more preferably 10 nm or less. An average diameter (Av) for the CNTs of 0.5 nm or more can inhibit CNT aggregation and increase CNT dispersibility. Moreover, an average diameter (Av) for the CNTs of 15 nm or less enables a sufficient increase in heat resistance of the obtained shaped product.

The average length of a structure of the CNTs at the time of synthesis is preferably at least 100 µm and not more than 5,000 µm.

Note that the average diameter (Av) and the average length of the CNTs can each be determined by measuring the diameter (external diameter) and length of 100 randomly selected carbon nanotubes using a transmission electron microscope or a scanning electron microscope.

Moreover, the average diameter (Av) and the average length of the CNTs may be adjusted by altering the production method and production conditions of the CNTs, or may be adjusted by combining a plurality of types of CNTs that are obtained by different methods.

The BET specific surface area of the CNTs is preferably 600 m²/g or more, more preferably 700 m²/g or more, and even more preferably 800 m²/g or more, and is preferably 2,000 m²/g or less, more preferably 1,800 m²/g or less, and even more preferably 1,500 m²/g or less. The BET specific surface area is preferably 1,300 m²/g or more in a situation in which the CNTs are mainly open CNTs. A BET specific surface area for the CNTs of 600 m²/g or more enables a sufficient increase in heat resistance of the obtained shaped product. Moreover, a BET specific surface area for the CNTs of 2,000 m²/g or less can inhibit CNT aggregation and increase CNT dispersibility, and can also inhibit both excessive hardness and reduced processability of the shaped product.

The term "BET specific surface area" as used in the present disclosure refers to nitrogen adsorption specific surface area measured by the BET method.

According to a super growth method described below, the CNTs are obtained as an aggregate that is aligned in a roughly perpendicular direction (aligned CNT aggregate) on a substrate having a catalyst layer for carbon nanotube growth on the surface thereof. The mass density of the CNTs in the form of the aforementioned aggregate is preferably at least 0.002 g/cm³ and not more than 0.2 g/cm³. A mass density of 0.2 g/cm³ or less enables homogeneous dispersion of the CNTs since binding between the CNTs is weak. Moreover, a mass density of 0.002 g/cm³ or more makes the CNTs easier to handle by improving the unity of the CNTs and preventing the CNTs from becoming unbound.

CNTs having the properties described above can, for example, be produced by a method (super growth method; refer to WO 2006/011655 A1) in which, in synthesis of CNTs through chemical vapor deposition (CVD) by supplying a feedstock compound and a carrier gas onto a substrate having a catalyst layer for carbon nanotube production on the surface thereof, catalytic activity of the catalyst layer is dramatically improved by providing a trace amount of an oxidant (catalyst activating material) in the system. Hereinafter, carbon nanotubes that are obtained by the super growth method are also referred to as "SGCNTs".

The amount of the CNTs that is compounded per 100 parts by mass of the rubber including the carboxyl group-containing ethylenically unsaturated monomer unit is preferably 0.01 parts by mass or more, more preferably 0.1 parts by mass or more, and even more preferably 0.5 parts by mass or more, and is preferably 20 parts by mass or less, more preferably 15 parts by mass or less, and even more preferably 5 parts by mass or less. An amount of the CNTs of 0.01 parts by mass or more per 100 parts by mass of the rubber including the carboxyl group-containing ethylenically unsaturated monomer unit enables sufficient improvement of heat resistance of the shaped product. Moreover, an amount of the CNTs of 20 parts by mass or less per 100 parts by mass of the rubber including the carboxyl group-containing ethylenically unsaturated monomer unit can inhibit both excessive hardness and reduced processability of the shaped product.

### <Compounding agents>

Examples of compounding agents that may optionally be compounded into the rubber composition include crosslinking agents, crosslinking promotors, crosslinking aids, crosslinking retarders, reinforcing fillers (for example, carbon black and silica), non-reinforcing fillers (for example, calcium carbonate, clay, talc, and diatomite), plasticizers (for example, phthalic acid esters, dioctyl adipate, diisononyl adipate, di-n-alkyl adipates, dialkyl adipates, dioctyl azelate, dialkyl sebacates, dioctyl sebacate, trialkyl citrates, epoxidized unsaturated fatty acid esters, trimellitic acid esters, and polyether esters), anti-aging agents, antioxidants, light stabilizers, anti-scorch agents such as primary amines, processing aids, glidants, adhesives, lubricants, flame retardants, fungicides, acid acceptors, antistatic agents, magnetic compounds, and colorants. No specific limitations are placed on the amount of such compounding agents other than being within a range that does not impair the effects disclosed herein, and the amount may be set in accordance with the objective of compounding.

### <Production method of rubber composition>

The rubber composition described above can be produced by mixing the rubber including an ethylenically unsaturated monomer unit having at least one carboxyl group (hereinafter, also referred to simply as "the rubber"), the compound having at least one amino group and an aromatic condensed ring structure including at least three rings (hereinafter, also referred to simply as "the compound"), one or more CNTs, and optionally compounded compounding agents by a known method.

In a situation in which the rubber is obtained in a dispersed state in a dispersion medium such as water (latex state), such as when the rubber is prepared by emulsion polymerization, the rubber is preferably solidified and dried by a known method before being kneaded with the compound, the CNTs, and so forth. This is because, if the CNTs are mixed into the latex of the rubber dispersed in the dispersion medium of water or the like and are dispersed therein, it may be difficult to obtain a favorable dispersion state since insufficient shear force is applied.

Mixing of the rubber, the compound, the CNTs, and the optional compounding agents may, for example, be carried out using a Banbury mixer or a roller.

Note that kneading of the rubber, the compound, the CNTs, and the optional compounding agents is more preferably carried out at 150°C or lower, and is even more preferably carried out at 100°C or lower. The kneading time is set as appropriate depending on the types and amounts of raw materials that are used and is normally at least 1 minute and not more than 180 minutes.

### (Shaped product)

The presently disclosed shaped product is obtained through shaping of the rubber composition set forth above.

The method by which the rubber composition is shaped may, for example, be a known technique such as pressing and heating in a mold. The temperature in shaping of the rubber composition is normally at least 50°C and not higher than 250°C. Moreover, the pressure in shaping of the rubber composition is normally at least 1 MPa and not more than 100 MPa.

As previously explained, it is presumed that the rubber contained in the rubber composition reacts with at least some of the compound contained in the rubber composition to form amide bonds in the shaped product. Moreover, it is presumed that π-π interactions arise between the carbon nanotubes and aromatic condensed ring structures including at least three rings that are derived from the compound and are bonded to the main chain of the rubber through amide bonds.

### EXAMPLES

The following provides a more specific description of the present disclosure based on examples. However, the present disclosure is not limited to the following examples. In the following description, "%" and "parts" used to express quantities are by mass, unless otherwise specified.

In the examples and comparative examples, the following methods were used to measure and evaluate the iodine value and polymer Mooney viscosity of a rubber, the BET specific surface area of carbon nanotubes, and the flow temperature of a shaped product.

### <Iodine value>

The iodine value of a rubber was measured in accordance with JIS K6235.

### <Polymer Mooney viscosity>

The Mooney viscosity (ML₁₊₄, 100°C) of a rubber was measured in accordance with JIS K6300-1.

### <BET specific surface area>

The BET specific surface area of CNTs was measured in accordance with JIS Z8830 using a BET specific surface area measuring device (HM model-1210 produced by Mountech Co., Ltd.).

### <Flow temperature: Tf>

The flow temperature Tf of a shaped product was evaluated using a thermomechanical analysis (TMA) device (TMA/SS6100 produced by Seiko Instruments Inc.).

Specifically, a specimen having dimensions of 0.5 cm × 0.5 cm and a thickness of 0.2 cm was cut out from a shaped product obtained through press forming. A TMA curve (horizontal axis: temperature, vertical axis: deformation) was measured with respect to the specimen by applying a load in a thickness direction of the specimen in accordance with JIS K7197. Measurement was carried out in a nitrogen atmosphere by a compression mode. A heating rate of 10°C per minute and a load of 1.0 N were used.

The flow temperature Tf was calculated as follows. Specifically, a temperature at which the deformation reached a maximum on the determined TMA curve (horizontal axis: temperature, vertical axis: deformation) was taken to be Tmax. The flow temperature Tf was determined to be the temperature of an intersection point between a tangent to the TMA curve at a temperature 5°C lower than Tmax (i.e., Tmax - 5°C) and a tangent to the TMA curve at a temperature 2°C higher than Tmax (i.e., Tmax + 2°C). The determined flow temperature Tf was used as an evaluation criterion for heat resistance. A higher value for Tf indicates better heat resistance.

### (Example 1)

### <Synthesis of hydrogenated carboxylated nitrile rubber (HXNBR)>

A metal bottle was charged with 180 parts of deionized water, 25 parts of a sodium dodecylbenzenesulfonate aqueous solution of 10% in concentration, 35 parts of acrylonitrile as an α,β-ethylenically unsaturated nitrile monomer, 6 parts of mono-n-butyl maleate as an ethylenically unsaturated monomer having at least one carboxyl group (carboxyl group-containing ethylenically unsaturated monomer), and 0.5 parts of t-dodecyl mercaptan (molecular weight modifier), in order. Gas inside of the metal bottle was purged three times with nitrogen and 59 parts of 1,3-butadiene was subsequently added as a conjugated diene monomer. Thereafter, the metal bottle was maintained at 5°C and 0.1 parts of cumene hydroperoxide (polymerization initiator) was added thereto. Polymerization was carried out for 16 hours while rotating the metal bottle. Next, 0.1 parts of a hydroquinone aqueous solution (polymerization terminator) of 10% in concentration was added to terminate the polymerization reaction. Thereafter, a rotary evaporator having a water temperature of 60°C was used to remove residual monomers and thereby obtain a latex of a carboxylated nitrile rubber (solid content concentration approximately 30%).

Next, the latex produced as described above and a palladium catalyst (solution obtained by mixing 1% palladium acetate acetone solution with deionized water of equivalent weight) were added into an autoclave in amounts such that the palladium content relative to the dry weight of the rubber contained in the resultant latex was 1,000 ppm. A hydrogenation reaction was carried out for 6 hours at a hydrogen pressure of 3 MPa and a temperature of 50°C to obtain a latex of a hydrogenated carboxylated nitrile rubber.

Finally, two volume equivalents of methanol were added to the resultant latex of the hydrogenated carboxylated nitrile rubber to cause solidification, the solid product (crumb) was subsequently removed by filtration, and the filtered off solid product was vacuum dried for 12 hours at 60°C to obtain the hydrogenated carboxylated nitrile rubber (HXNBR). The resultant hydrogenated carboxylated nitrile rubber (HXNBR) had an iodine value of 11 and a Mooney viscosity of 45 as measured by the previously described methods.

With respect to the resultant hydrogenated carboxylated nitrile rubber (HXNBR), the amount of mono-n-butyl maleate units included in the rubber as carboxyl group-containing ethylenically unsaturated monomer units was confirmed by the following procedure. Specifically, a 0.2 g sample in the form of an approximately 2 mm square was cut from the resultant rubber and was stirred for 4 hours with 100 mL of 2-butanone. Thereafter, 20 mL of ethanol and 10 mL of water were added. Next, the number of moles of carboxyl groups per 100 g of the rubber was determined by titration under stirring at room temperature using a 0.02N hydrous ethanol solution of potassium hydroxide with thymolphthalein as an indicator. The determined number of moles was converted to an amount of mono-n-butyl maleate and it was found that the amount of mono-n-butyl maleate units in the rubber was 6%.

### <Production of rubber composition>

A Banbury mixer was used to knead 100 parts of the resultant hydrogenated carboxylated nitrile rubber (HXNBR), 1 part of single-walled carbon nanotubes (SWCNTs-1), and 1 part of 1-aminopyrene as a compound having at least one amino group and an aromatic condensed ring structure including at least three rings in accordance with the amounts shown in Table 1. The single-walled carbon nanotubes (SWCNTs-1) were SGCNTs (BET specific surface area: 865 m²/g, average diameter (Av): 3.4 nm, average length: 2,350 µm) that were produced by the super growth method. The temperature of the rubber composition during kneading was set as 100°C or lower.

### <Production of shaped product>

The resultant rubber composition was loaded into a mold of 15 cm in length, 15 cm in width, and 0.2 cm in depth, and was press formed for 20 minutes at 170°C while applying a pressing pressure of 10 MPa to obtain a shaped product in the form of a sheet. The flow temperature Tf of the resultant shaped product was measured. The results are shown in Table 1.

### (Examples 2 and 3)

A rubber composition and a shaped product were produced in the same way as in Example 1 with the exception that the amount of 1-aminopyrene used in production of the rubber composition was changed to 0.5 parts (Example 2) or 5 parts (Example 3). The flow temperature Tf was measured in the same way as in Example 1. The results are shown in Table 1.

### (Examples 4 to 6)

A rubber composition and a shaped product were produced in the same way as in Example 1 with the exception that 1,6-diaminopyrene (Example 4), 2-aminoanthracene (Example 5), or 3-amino-9-ethylcarbazole (Example 6) was used instead of 1-aminopyrene in production of the rubber composition. The flow temperature Tf was measured in the same way as in Example 1. The results are shown in Table 1.

### (Example 7)

A rubber composition and a shaped product were produced in the same way as in Example 1 with the exception that multi-walled carbon nanotubes (MWCNTs) were used instead of the SWCNTs-1 in production of the rubber composition. The flow temperature Tf was measured in the same way as in Example 1. The results are shown in Table 1.

The multi-walled carbon nanotubes (MWCNTs) were the product "NC7000" produced by Nanocyl SA (BET specific surface area: 256 m²/g, average diameter (Av): 9.5 nm, average length: 1.5 µm).

### (Example 8)

A rubber composition and a shaped product were produced in the same way as in Example 1 with the exception that other single-walled carbon nanotubes (SWCNTs-2) were used instead of the SWCNTs-1 in production of the rubber composition. The flow temperature Tf was measured in the same way as in Example 1. The results are shown in Table 1.

SWCNTs-2 used as the single-walled carbon nanotubes were the product "HiPco®" (HiPco is a registered trademark in Japan, other countries, or both) produced by NanoIntegris Inc. (BET specific surface area: 512 m²/g, average diameter (Av): 1.1 nm, average length: 3.0 µm).

### (Example 9)

A rubber composition and a shaped product were produced in the same way as in Example 1 with the exception that 100 parts of a carboxylated acrylic rubber (XACM) synthesized as described below was used instead of 100 parts of the hydrogenated carboxylated nitrile rubber (HXNBR) in production of the rubber composition. The flow temperature Tf was measured in the same way as in Example 1. The results are shown in Table 1.

### <Synthesis of carboxylated acrylic rubber (XACM)>

A polymerization reaction vessel equipped with a thermometer and a stirring device was charged with 200 parts of deionized water, 3 parts of sodium lauryl sulfate, 49 parts of ethyl acrylate and 49 parts of n-butyl acrylate as (meth)acrylic acid ester monomers, and 2 parts of monomethyl fumarate as an ethylenically unsaturated monomer having at least one carboxyl group (carboxyl group-containing ethylenically unsaturated monomer). Next, reduced pressure degassing and purging with nitrogen were carried out twice to sufficiently remove oxygen from the vessel. Thereafter, 0.005 parts of cumene hydroperoxide and 0.002 parts of sodium formaldehyde sulfoxylate were added into the vessel, emulsion polymerization was initiated at 30°C under normal pressure, and a reaction was carried out until the polymerization conversion rate reached 95%. The resultant latex was solidified using calcium chloride aqueous solution, was washed with water, and was dried to obtain the carboxylated acrylic rubber (XACM). The resultant carboxylated acrylic rubber (XACM) had a Mooney viscosity of 35 as measured by the previously described method.

With respect to the resultant carboxylated acrylic rubber (XACM), the amount of monomethyl fumarate units included in the rubber as carboxyl group-containing ethylenically unsaturated monomer units was confirmed by the following procedure. Specifically, a 0.2 g sample in the form of an approximately 2 mm square was cut from the resultant rubber and was stirred for 4 hours with 100 mL of 2-butanone. Thereafter, 20 mL of ethanol and 10 mL of water were added. Next, the number of moles of carboxyl groups per 100 g of the rubber was determined by titration under stirring at room temperature using a 0.02N hydrous ethanol solution of potassium hydroxide with thymolphthalein as an indicator. The determined number of moles was converted to an amount of monomethyl fumarate and it was found that the amount of monomethyl fumarate units in the rubber was 2%.

### (Examples 10 and 11)

A rubber composition and a shaped product were produced in the same way as in Example 9 with the exception that 2-aminoanthracene (Example 10) or 3-amino-9-ethylcarbazole (Example 11) was used instead of 1-aminopyrene in production of the rubber composition. The flow temperature Tf was measured in the same way as in Example 1. The results are shown in Table 1.

### (Example 12)

A rubber composition and a shaped product were produced in the same way as in Example 9 with the exception that the multi-walled carbon nanotubes (MWCNTs) were used instead of the SWCNTs-1 in production of the rubber composition. The flow temperature Tf was measured in the same way as in Example 1. The results are shown in Table 1.

### (Comparative Example 1)

A rubber composition and a shaped product were produced in the same way as in Example 1 with the exception that a hydrogenated nitrile rubber that did not include an ethylenically unsaturated monomer unit having at least one carboxyl group (HNBR; produced by ZEON Corporation, product name: Zetpol® 2010L (Zetpol is a registered trademark in Japan, other countries, or both), iodine value 11, Mooney viscosity (ML₁₊₄, 100°C) 57.5) was used instead of 100 parts of the hydrogenated carboxylated nitrile rubber (HXNBR) in production of the rubber composition. The flow temperature Tf was measured in the same way as in Example 1. The results are shown in Table 1.

### (Comparative Example 2)

A rubber composition and a shaped product were produced in the same way as in Example 1 with the exception that the single-walled carbon nanotubes (SWCNTs-1) were not compounded in production of the rubber composition. The flow temperature Tf was measured in the same way as in Example 1. The results are shown in Table 1.

### (Comparative Example 3)

A rubber composition and a shaped product were produced in the same way as in Example 1 with the exception that 1-aminopyrene was not compounded in production of the rubber composition. The flow temperature Tf was measured in the same way as in Example 1. The results are shown in Table 1.

### (Comparative Example 4)

A rubber composition and a shaped product were produced in the same way as in Example 1 with the exception that 1,3,5-tris(4-aminophenyl)benzene, which is a compound that does not have an aromatic condensed ring structure, was used instead of 1-aminopyrene in production of the rubber composition. The flow temperature Tf was measured in the same way as in Example 1. The results are shown in Table 1.

**Table 1**

| | | | Example 1 | Example 2 | Example 3 | Example 4 | Example 5 | Example 6 | Example 7 | Example 8 | Exanple 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|---|---|
| Rubber composition | Rubber | Type | HXNBR | HXNBR | HXNBR | HXNBR | HXNBR | HXNBR | HXNBR | HXNBR | XACM | XACM | XACM | XACM | HNBR | HXNBR | HXNBR | HXNBR |
| | | Amount [parts by mass] | 100 | 100 | 100 | 100 | 100 | 100 | 100 | 100 | 100 | 100 | 100 | 100 | 100 | 100 | 100 | 100 |
| | CNTs | Type | SWCNTs-1 | SWCNTs-1 | SWCNTs-1 | SWCNTs-1 | SWCNTs-1 | SWCNTs-1 | MWCNTs | SWCNTs-2 | SWCNTs-1 | SWCNTs-1 | SWCNTs-1 | MWCNTs | SWCNTs-1 | - | SWCNTs-1 | SWCNTs-1 |
| | | BET specific surface area [m²/g] | 865 | 865 | 865 | 865 | 865 | 865 | 256 | 512 | 865 | 865 | 865 | 256 | 865 | - | 865 | 865 |
| | | Amount [parts by mass] | 1 | 1 | 1 | 1 | 1 | 1 | 1 | 1 | 1 | 1 | 1 | 1 | 1 | - | 1 | 1 |
| | Compound | Number of amino groups [-] | 1 | 1 | 1 | 2 | 1 | 1 | 1 | 1 | 1 | 1 | 1 | 1 | 1 | 1 | - | 3 |
| | | Number of rings in aromatic condensed ring structure [-] | 4 | 4 | 4 | 4 | 3 | 3 | 4 | 4 | 4 | 3 | 3 | 4 | 4 | 4 | - | - |
| | | Amount [parts by mass] | 1 | 0.5 | 5 | 1 | 1 | 1 | 1 | 1 | 1 | 1 | 1 | 1 | 1 | 1 | - | 1 |
| Evaluation | Flow temperature Tf [°C] | | 456 | 398 | 320 | 462 | 390 | 387 | 425 | 435 | 340 | 335 | 338 | 328 | 186 | 152 | 212 | 171 |

It can be seen from Table 1 that it was possible to improve heat resistance of the shaped products of Examples 1 to 12 in which a rubber including an ethylenically unsaturated monomer unit having at least one carboxyl group, a compound having at least one amino group and an aromatic condensed ring structure including at least three rings, and carbon nanotubes were used together compared to the shaped product of Comparative Example 1 in which a rubber including an ethylenically unsaturated monomer unit having at least one carboxyl group was not used, the shaped product of Comparative Example 2 in which carbon nanotubes were not used, and the shaped products of Comparative Examples 3 and 4 in which a compound having at least one amino group and an aromatic condensed ring structure including at least three rings was not used.

Moreover, Examples 1 to 3 in Table 1 demonstrate that heat resistance of a shaped product can be further improved by altering the amount of the compound having at least one amino group and an aromatic condensed ring structure including at least three rings. Furthermore, Examples 1, 4 to 6, and 9 to 11 in Table 1 demonstrate that heat resistance of a shaped product can be further improved by altering the type of compound having at least one amino group and an aromatic condensed ring structure including at least three rings. Also, Examples 1, 7, and 8 and Examples 9 and 12 in Table 1 demonstrate that heat resistance of a shaped product can be improved through use of single-walled CNTs, and particularly through use of single-walled CNTs having a large BET specific surface area.

### INDUSTRIAL APPLICABILITY

According to the present disclosure, it is possible to provide a shaped product having excellent heat resistance and a rubber composition with which the shaped product can be formed.

## Claims

1. A rubber composition comprising:
a rubber including an ethylenically unsaturated monomer unit having at least one carboxyl group;
a compound having at least one amino group and an aromatic condensed ring structure including at least three rings; and
one or more carbon nanotubes.

2. The rubber composition according to claim 1, wherein
the compound is contained in a proportion of at least 0.5 parts by mass and not more than 5 parts by mass per 100 parts by mass of the rubber.

3. The rubber composition according to claim 1 or 2, wherein
the compound is at least one selected from the group consisting of 2-aminoanthracene, 1-aminopyrene, 1,6-diaminopyrene, and 3-amino-9-ethylcarbazole.

4. A shaped product obtained through shaping of the rubber composition according to any one of claims 1 to 3.
